# FASCICULE DE BREVET EUROPEEN

(11) **EP 2 868 088 B1**
(45) Date de publication et mention de la délivrance du brevet: **31.10.2018**
(21) Numéro de dépôt: 13744619.1
(22) Date de dépôt: 25.06.2013
(51) Int. Cl.: H04N 19/119, H04N 19/142, H04N 19/176, H04N 19/192, H04N 19/463, H04N 19/597

(54) **PROCÉDÉ DE CODAGE D'UN BLOC COURANT D'UNE PREMIÈRE COMPOSANTE D'IMAGE PAR RAPPORT A UN BLOC DE RÉFÉRENCE D'AU MOINS UNE DEUXIÈME COMPOSANTE D'IMAGE, DISPOSITIF DE CODAGE ET PROGRAMME D'ORDINATEUR CORRESPONDANT**
VERFAHREN ZUR CODIERUNG EINES AKTUELLEN BLOCKS EINER ERSTEN BILDKOMPONENTE RELATIV ZU EINEM REFERENZBLOCK MINDESTENS EINER ZWEITEN BILDKOMPONENTE, CODIERUNGSVORRICHTUNG UND ENTSPRECHENDES COMPUTERPROGRAMM
METHOD FOR ENCODING A CURRENT BLOCK OF A FIRST IMAGE COMPONENT RELATIVE TO A REFERENCE BLOCK OF AT LEAST ONE SECOND IMAGE COMPONENT, ENCODING DEVICE AND CORRESPONDING COMPUTER PROGRAM

(30) Priorité: 27.06.2012 FR 1256129
(43) Date de publication de la demande: 06.05.2015
(73) Titulaire: Orange, 75015 Paris (FR)
(72) Inventeur: JUNG, Joël, F-78320 Le Mesnil Saint Denis (FR); VISWANATHAN, Kartik, F-35000 Rennes (FR)
(86) Numéro de dépôt international: PCT/FR2013/051474
(87) Numéro de publication internationale: WO 2014/001703

(56) Documents cités:
- WO-A1-2011/061089
- WO-A1-2011/127966
- WO-A2-2011/046607
- US-A- 5 351 095
- US-B1- 7 499 492
- CHIA-YUAN TENG ET AL: "A new quadtree predictive image coder", PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US, vol. 2, 23 octobre 1995 (1995-10-23), pages 73-76, XP010196975, DOI: 10.1109/ICIP.1995.537418 ISBN: 978-0-7803-3122-8
- MERKLE P ET AL: "The effects of multiview depth video compression on multiview rendering", SIGNAL PROCESSING. IMAGE COMMUNICATION, ELSEVIER SCIENCE PUBLISHERS, AMSTERDAM, NL, vol. 24, no. 1-2, 1 janvier 2009 (2009-01-01), pages 73-88, XP025884346, ISSN: 0923-5965, DOI: 10.1016/J.IMAGE.2008.10.010 [extrait le 2008-11-05]

## Description

### Domaine de l'invention

La présente invention se rapporte de manière générale au domaine du traitement d'images, et plus précisément au codage d'images numériques et de séquences d'images numériques.

L'invention peut ainsi notamment s'appliquer au codage vidéo mis en oeuvre dans les codeurs vidéo actuels à venir (ITU-T/ISO MPEG HEVC) et leurs extensions.

### Arrière-plan de l'invention

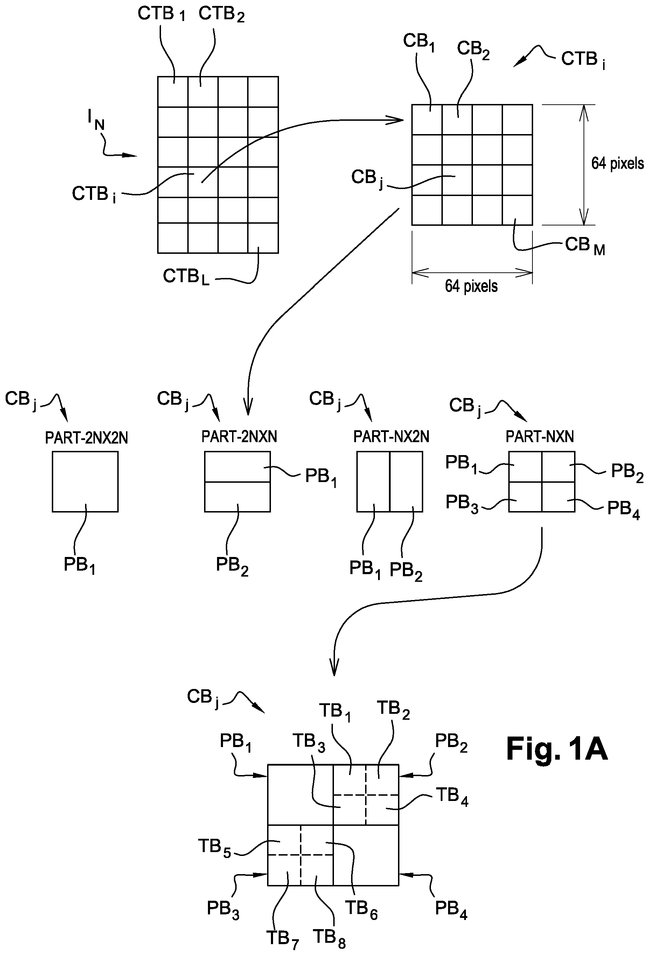

La norme HEVC actuellement en cours d'élaboration et décrite dans le document « B. Bross, W.-J. Han, J.-R. Ohm, G. J. Sullivan, and T. Wiegand, "High efficiency video coding (HEVC) text specification draft 6," document JCTVC-H1003 of JCT-VC, San Jose CA, USA, February 2012» est similaire à la norme précédente H.264, en ce sens qu'elle utilise un partitionnement par blocs de la séquence vidéo. La norme HEVC se distingue toutefois de la norme H.264 par le fait que le partitionnement mis en oeuvre respecte une structure arborescente appelée « quadtree ». A cet effet, comme représenté sur la **figure 1A**, une image courante I_{N} est partitionnée une première fois en une pluralité de blocs carrés CTB₁, CTB₂, ..., CTBᵢ,..., CTB_{L} de taille 64x64 pixels (1≤i≤L). Pour un bloc CTBᵢ donné, il est considéré que ce bloc constitue la racine d'un arbre de codage dans lequel :
- un premier niveau de feuilles sous la racine correspond à un premier niveau de profondeur de partitionnement du bloc CTBᵢ pour lequel le bloc CTBᵢ a été partitionné une première fois en une pluralité de blocs de codage,
- un deuxième niveau de feuilles sous le premier niveau de feuilles correspond à un deuxième niveau de profondeur de partitionnement de bloc CTBᵢ pour lequel le bloc CTBᵢ partitionné une première fois est partitionné une deuxième fois en une pluralité de blocs de codage,...
- ... un kième niveau de feuilles sous le k-1 ième niveau de feuilles qui correspond à un kième niveau de profondeur de partitionnement de bloc CTBᵢ pour lequel le bloc CTBᵢ partitionné k-1 fois est partitionné une dernière fois en une pluralité de blocs de codage.

Dans un codeur compatible HEVC, l'itération du partitionnement du bloc CTBᵢ est effectuée jusqu'à un niveau de profondeur de partitionnement prédéterminé.

A l'issue des partitionnements successifs précités du bloc CTBᵢ, comme représenté à la **figure 1A****,** ce dernier est partitionné au final en une pluralité de blocs de codage notés CB₁, CB₂,..., CBⱼ,..., CB_{M} avec 1≤j≤M.

La taille desdits blocs de codage peut être choisie de façon adaptative à l'aide d'un partitionnement de blocs respectant une arborescence de type « quadtree », dans laquelle les feuilles de cette dernière représentent respectivement les blocs de codage CB₁, CB₂,..., CBⱼ,..., CB_{M} obtenus sur différents niveaux de profondeur de partitionnement.

En référence à la **figure 1A****,** pour un bloc CBⱼ donné, il est considéré que ce bloc constitue la racine d'un arbre de prédiction et de transformation dudit bloc, par exemple de type transformée en cosinus discrète (DCT). L'arbre de prédiction d'un bloc CBⱼ donné est représentatif de la manière dont est partitionné le bloc CBⱼ en une pluralité de blocs PB₁, PB₂,..., PBₜ,..., PB_{P}, (1≤t≤P) lesquels sont appelés blocs de prédiction. Pour un bloc de prédiction considéré PBₜ, des paramètres de prédiction, tels que par exemple le mode de codage, les vecteurs de mouvement, etc sont spécifiés dans une unité de prédiction (en anglais « prediction unit »).

Il existe différents modes de partitionnement d'un bloc de codage CBⱼ considéré. La **figure 1A** représente par exemple les différents modes de partitionnement du bloc de codage CBⱼ considéré, dans le cas d'une prédiction INTER de ce dernier. Lesdits modes de partitionnement sont au nombre de quatre :
- le mode PART_2Nx2N correspond à l'absence de partitionnement du bloc de codage CBⱼ considéré qui correspond ainsi à un unique bloc de prédiction PB₁,
- le mode PART_2NxN correspond à un partitionnement horizontal du bloc de codage CBⱼ considéré en deux blocs de prédiction rectangulaires PB₁ et PB₂,
- le mode PART_Nx2N correspond à un partitionnement vertical du bloc de codage CBⱼ considéré en deux blocs de prédiction rectangulaires PB₁ et PB₂,
- le mode PART_NxN correspond à un partitionnement du bloc de codage CBⱼ considéré en quatre blocs de prédiction carrés PB₁, PB₂, PB₃, PB₄ qui ont tous la même taille.

Après codage prédictif du bloc de codage CBⱼ considéré, ce dernier peut être à nouveau partitionné en une pluralité de blocs plus petits TB₁, TB₂,..., TBᵥ,..., TB_{Q} (1≤v≤Q) qui sont appelés blocs de transformée. Un tel partitionnement respecte une arborescence de type « quadtree », appelée « residual quadtree », dans laquelle les feuilles de cette dernière représentent respectivement les blocs de codage TB₁, TB₂,..., TBᵥ,..., TB_{Q} obtenus sur différents niveaux de profondeur de partitionnement.

La **figure 1A** représente un exemple de partitionnement du bloc de codage CBⱼ qui a été prédit à l'aide du partitionnement PART_NxN. Dans l'exemple représenté, les blocs PB₂ et PB₃ du bloc de codage CBⱼ sont par exemple chacun partitionnés en quatre blocs carrés plus petits et tous de la même taille, respectivement TB₁, TB₂, TB₃, TB₄ et TB₅, TB₆, TB₇, TB₈. Un tel partitionnement est représenté en pointillé sur la **figure 1A**.

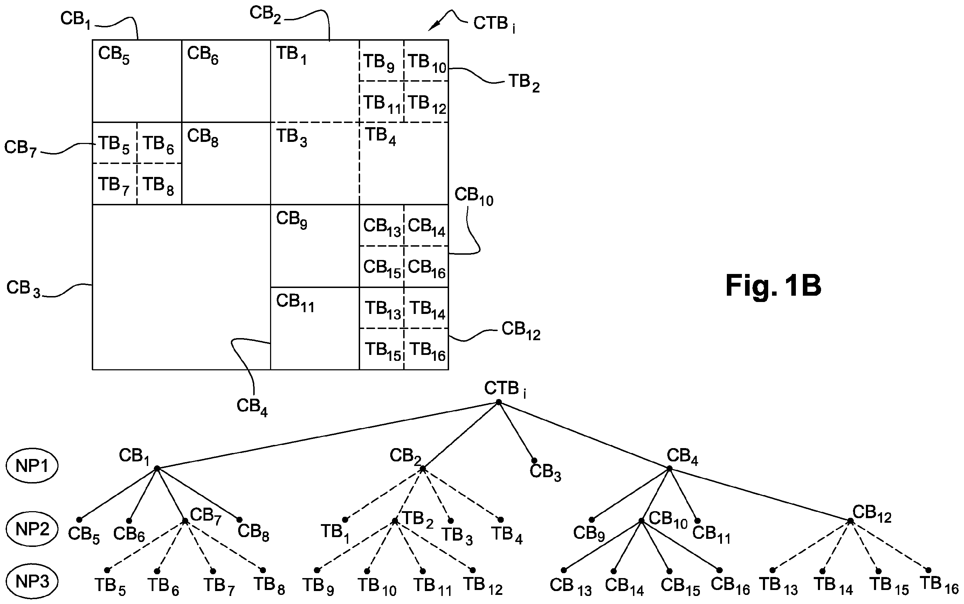

La **figure 1B** représente un exemple de partitionnement d'un bloc CTBᵢ considéré qui a été obtenu après codage prédictif et codage par transformée de ce dernier, ainsi que l'arborescence de partitionnement correspondante. Dans l'exemple représenté :
- le bloc CTBᵢ, considéré comme la racine de l'arbre de codage, est représenté en trait continu gras,
- les blocs de codage CB₁ à CB₁₆ qui constituent d'une part les feuilles de l'arbre de codage, et d'autre part les racines de l'arbre « residual quadtree » sont représentés en trait continu fin,
- les blocs de transformée TB₁ à TB₁₆ qui constituent les feuilles de l'arbre « residual quadtree » sont représentés en trait pointillé.

Dans la structure arborescente ainsi constituée, il existe :
- un premier niveau de profondeur de partitionnement NP1 qui contient uniquement des blocs de codage, tels que les blocs CB₁ à CB₄,
- un deuxième niveau de profondeur de partitionnement NP2 qui contient :
   ▪ des blocs de codage, tels que les blocs CB₅ à CB₈ obtenus à l'issue du partitionnement du bloc CB₁, ainsi que les blocs CB₉ à CB₁₂ obtenus à l'issue du partitionnement du bloc CB₄,
   ▪ des blocs de transformée, tels que les blocs TB₁ à TB₄ obtenus à l'issue du partitionnement du bloc CB₂,
- un troisième niveau de profondeur de partitionnement NP3 qui contient :
   ▪ des blocs de codage, tels que les blocs CB₁₃ à CB₁₆ obtenus à l'issue du partitionnement du bloc CB₁₀,
   ▪ des blocs de transformée, tels que les blocs TB₅ à TB₈ obtenus à l'issue du partitionnement du bloc CB₇, les blocs TB₉ à TB₁₂ obtenus à l'issue du partitionnement du bloc TB₂, les blocs TB₁₂ à TB₁₆ obtenus à l'issue du partitionnement du bloc CB₁₂.

Dans un codeur compatible HEVC, pour un bloc CTBᵢ considéré, plusieurs partitionnements différents de ce dernier sont mis en compétition au codeur, c'est-à-dire respectivement différentes combinaisons d'itérations de partitionnement, dans le but de sélectionner le meilleur partitionnement, c'est-à-dire celui qui optimisera le codage du bloc CTBᵢ considéré selon un critère de performance de codage prédéterminé, par exemple le coût débit/distorsion ou bien un compromis efficacité/complexité, qui sont des critères bien connus de l'homme du métier.

Une fois réalisé le partitionnement optimal d'un bloc CTBᵢ considéré, une séquence d'informations numériques, telle que par exemple une suite de bits, représentative de ce partitionnement optimal, est transmise dans un flux destiné à être lu par un décodeur vidéo.

Un tel flux comprend également:
- des données résiduelles qui sont les coefficients du bloc résiduel quantifié et éventuellement, lors d'un codage en mode Inter, des données résiduelles des vecteurs mouvement,
- des paramètres de codage qui sont représentatifs du mode de codage utilisé, en particulier:
   ▪ le mode de prédiction (prédiction intra, prédiction inter, prédiction par défaut réalisant une prédiction pour laquelle aucune information n'est transmise au décodeur (« en anglais « skip »)) ;
   ▪ des informations précisant le type de prédiction (orientation, composante d'image de référence, ...) ;
   ▪ le type de transformée, par exemple DCT 4x4, DCT 8x8, etc...
   ▪ les informations de mouvement si nécessaire ;
   ▪ etc.

Plus particulièrement dans la technologie HEVC 3D, il est proposé de coder une première composante d'image par rapport à au moins une deuxième composante d'image déjà codée, puis décodée, lesdites première et deuxième composantes d'image étant représentatives d'une même scène.

Les première et deuxième composantes d'image précitées sont par exemple respectivement une composante de texture et sa composante de profondeur associée, telles que mises en oeuvre dans le nouveau format de codage vidéo, appelé MVD (pour « Multiview Video + Depth » en anglais) qui fait l'objet de développements actuels.

Alternativement, les première et deuxième composantes d'image précitées pourraient être respectivement une composante de profondeur et sa composante de texture associée.

Conformément à la technologie HEVC 3D, les première et deuxième composantes sont chacune partitionnées en une pluralité de blocs qui sont ensuite partitionnés comme expliqué ci-dessus. De telles opérations de partitionnement s'avèrent très coûteuses en calculs au codeur puisqu'elles doivent être effectuées dans leur totalité d'abord sur la deuxième composante, puis sur la première.

Un document reflétant l'état de la technique antérieure est: WO 2011/127966 A1 (FRAUNHOFER GES FORSCHUNG [DE]; KIRCHHOFFER HEINER [DE]; WINKEN MARTIN) 20 octobre 2011 (2011-10-20).

### Objet et résumé de l'invention

L'invention est définie par les revendications.

Un des buts de l'invention est de remédier à des inconvénients de l'état de la technique précité.

A cet effet, un objet de la présente invention concerne un procédé de codage d'au moins un bloc courant d'une première composante d'image par rapport à un bloc de référence d'au moins une deuxième composante d'image, les première et deuxième composantes d'image étant représentatives d'une même scène, le bloc de référence ayant été au préalable soumis à un codage par partitionnement, puis à un décodage, le partitionnement du bloc de référence étant effectué une pluralité de fois jusqu'à l'obtention d'un niveau déterminé de profondeur de partitionnement.

Un tel procédé de codage est caractérisé en ce qu'il comprend les étapes consistant, en fonction du type des première et deuxième composantes d'image, à :
- soit partitionner le bloc courant une pluralité de fois jusqu'à l'obtention d'un niveau de profondeur de partitionnement dépendant du niveau de partitionnement du bloc de référence,
- soit partitionner le bloc courant à partir d'un niveau de profondeur de partitionnement ayant été préalablement initialisé par un niveau de profondeur de partitionnement qui dépend du niveau de profondeur de partitionnement du bloc de référence.

Une telle disposition permet ainsi, selon la nature des première et deuxième composantes d'image :
- soit de stopper les opérations de partitionnement successives du bloc courant à un niveau de profondeur de partitionnement qui est considéré comme suffisant car respectant un critère de performance de codage prédéterminé, tel que par exemple le coût débit /distorsion,
- soit de partitionner directement le bloc courant à partir d'un niveau de profondeur de partitionnement déjà établi et qui est proche de celui du niveau de profondeur de partitionnement du bloc de référence.

Il en résulte une réduction non négligeable de la complexité de calculs au codeur qui est rendue possible grâce au fait que les première et deuxième composantes d'image représentent une même scène.

Il convient de noter que les première et deuxième composantes d'image ne sont pas des morceaux d'image mais représentent deux vues différentes d'une image complète représentant une même scène.

Selon un mode de réalisation particulier, l'étape de partitionnement du bloc courant, une pluralité de fois, est mise en oeuvre lorsque la première composante d'image est une image de profondeur et la deuxième composante d'image est une image de texture associée à l'image de profondeur, le bloc courant et le bloc de référence ayant des positions identiques respectivement dans la première composante d'image et dans la deuxième composante d'image.

Une telle disposition permet une réduction de la complexité en calculs au codeur, lorsqu'une image de profondeur est codée par rapport à une image de texture.

Selon un autre mode de réalisation particulier, l'étape de partitionnement du bloc courant à partir d'un niveau de profondeur de partitionnement préalablement initialisé est mise en oeuvre lorsque la première composante d'image est une image de texture et la deuxième composante d'image est une image de profondeur associée à l'image de texture, le bloc courant et le bloc de référence ayant des positions identiques respectivement dans la première composante d'image et dans la deuxième composante d'image.

Une telle disposition permet une réduction de la complexité en calculs au codeur, lorsqu'une image de texture est codée par rapport à une image de profondeur.

D'autres types de première et deuxième composantes d'image peuvent bien sûr être envisagés.

Ainsi, les première et deuxième composantes d'image peuvent être respectivement :
- deux vues d'une même image multi-vues, lesdites deux vues représentant la même scène soit au même instant, soit à un instant différent, ou bien
- une composante luma et une composante chroma, ou bien
- deux couches différentes lors d'un codage vidéo scalable,
le bloc courant et le bloc de référence ayant des positions identiques respectivement dans la première composante d'image et dans la deuxième composante d'image.

Il est également possible d'envisager le codage d'une première composante d'image par rapport à une deuxième composante d'image et à une troisième composante d'image. Dans ce cas par exemple :
- la première composante d'image peut être une composante Y,
- la deuxième composante d'image peut être une composante U,
- la troisième composante d'image peut être une composante V.

L'invention concerne également un dispositif de codage d'au moins un bloc courant d'une première composante d'image par rapport à un bloc de référence d'au moins une deuxième composante d'image, les première et deuxième composantes d'image étant représentatives d'une même scène, le bloc de référence ayant été au préalable soumis à un codage par partitionnement, puis à un décodage, le partitionnement du bloc de référence étant effectué une pluralité de fois jusqu'à l'obtention d'un niveau déterminé de profondeur de partitionnement.

Un tel dispositif de codage est remarquable en ce qu'il comprend :
- des premiers moyens de partitionnement du bloc courant adaptés pour partitionner ce dernier une pluralité de fois jusqu'à l'obtention d'un niveau de profondeur de partitionnement dépendant du niveau de partitionnement du bloc de référence,
- des seconds moyens de partitionnement du bloc courant adaptés pour partitionner ce dernier à partir d'un niveau de profondeur de partitionnement du bloc courant ayant été préalablement initialisé par un niveau de profondeur de partitionnement dépendant du niveau de profondeur de partitionnement du bloc de référence,
les premiers et seconds moyens de partitionnement étant activés sélectivement en fonction du type des première et deuxième composantes d'image.

Selon un mode de réalisation particulier, les premiers moyens de partitionnement sont activés lorsque la première composante d'image est une image de profondeur et la deuxième composante d'image est une image de texture associée à l'image de profondeur, le bloc courant et le bloc de référence ayant des positions identiques respectivement dans la première composante d'image et dans la deuxième composante d'image.

Selon un autre mode de réalisation particulier, les seconds moyens de partitionnement sont activés lorsque la première composante d'image est une image de texture et la deuxième composante d'image est une image de profondeur associée à l'image de texture, le bloc courant et le bloc de référence ayant des positions identiques respectivement dans la première composante d'image et dans la deuxième composante d'image.

L'invention concerne encore un programme d'ordinateur comportant des instructions pour mettre en oeuvre le procédé de codage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de codage selon l'invention, tels que décrits ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le dispositif de codage et le programme d'ordinateur correspondant précités présentent au moins les mêmes avantages que ceux conférés par le procédé de codage selon la présente invention.

### Brève description des dessins

D'autres caractéristiques et avantages apparaîtront à la lecture de modes de réalisation préférés décrits en référence aux figures dans lesquelles:
- la figure 1A représente les opérations successives de partitionnement d'un bloc conformément à la technologie HEVC,
- la figure 1B représente un exemple de partitionnement d'un bloc de codage qui a été obtenu après prédiction et transformation de ce dernier, ainsi que l'arborescence de prédiction et de transformation correspondante,
- les figures 2A et 2B représentent des étapes du procédé de codage selon l'invention,
- la figure 3 représente un mode de réalisation d'un dispositif de codage selon l'invention,
- la figure 4A représente un exemple de partitionnement d'un bloc de référence d'une composante d'image déjà codée, puis décodée, ainsi que l'arborescence représentative du partitionnement effectué,
- la figure 4B représente un exemple de partitionnement d'un bloc courant d'une composante d'image à coder par rapport au partitionnement du bloc de référence représenté sur la figure 4A, ainsi que l'arborescence représentative du partitionnement effectué,
- la figure 4C représente un autre exemple de partitionnement d'un bloc courant d'une composante d'image à coder par rapport au partitionnement du bloc de référence représenté sur la figure 4A, ainsi que l'arborescence représentative du partitionnement effectué.

### Description détaillée du procédé de codage de l'invention

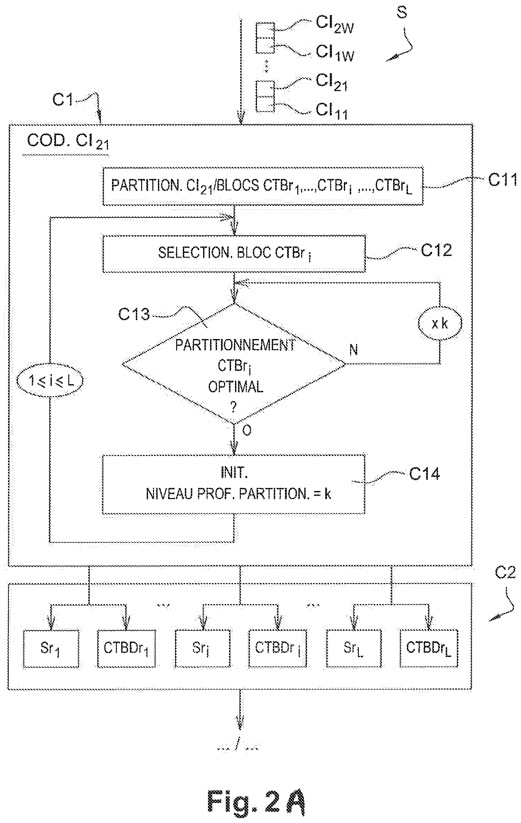

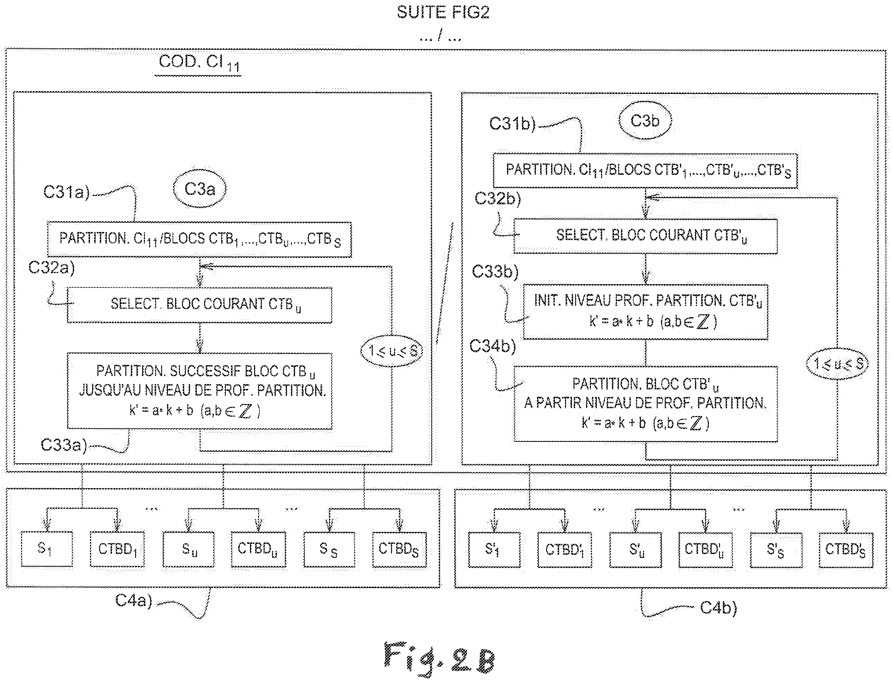

Un mode de réalisation de l'invention va maintenant être décrit, dans lequel le procédé de codage selon l'invention est utilisé pour coder une séquence d'images selon un flux binaire proche de celui qu'on obtient par un codage selon la norme en cours d'élaboration HEVC 3D. Dans ce mode de réalisation, le procédé de codage selon l'invention est par exemple implémenté de manière logicielle ou matérielle par modifications d'un codeur initialement conforme à la norme HEVC 3D. Le procédé de codage selon l'invention est représenté sous la forme d'un algorithme comportant des étapes C1 à C4a) ou bien C1 à C4b) telles que représentées sur les **figures 2A** et **2B****.**

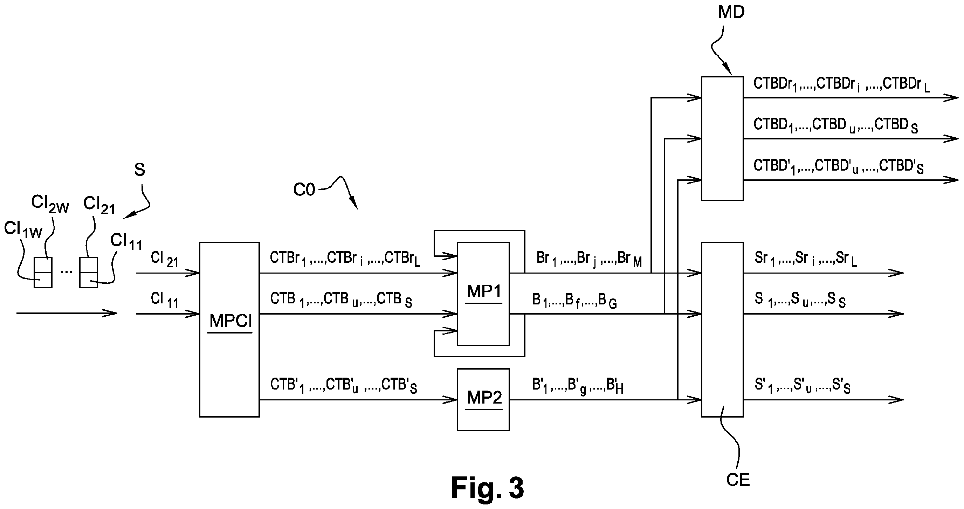

Selon le mode de réalisation de l'invention, le procédé de codage selon l'invention est implémenté dans un dispositif de codage CO représenté à la **figure 3****.**

Comme expliqué plus haut dans la description, en référence aux **figures 2** et **3****,** le procédé de codage selon l'invention consiste plus particulièrement à coder une première composante d'image CI₁₁ qui est la composante courante d'une séquence S d'images (CI₁₁, CI₂₁),...., (CI_{1W}, CI_{2W}) à coder, par rapport à au moins une deuxième composante d'image CI₂₁ qui est une composante d'image de référence de la séquence d'images à coder, c'est-à-dire qui a été préalablement codée, puis décodée. La première composante d'image CI₁₁ est acquise en association avec la deuxième composante d'image CI₂₁, les première et deuxième composantes d'image étant représentatives d'une même scène.

Dans le cas où la composante d'image CI₂₁ qui vient d'être codée est une image de texture et que la composante d'image CI₁₁ à coder qui est associée à la composante d'image CI₂₁ est une image de profondeur, de façon connue en soi, les composantes CI₂₁,..., CI_{2W} de la séquence S sont préalablement codées puis décodées. Puis les composantes CI₁₁,..., CI_{1W} de la séquence S sont codées à leur tour les unes après les autres.

Dans le cas d'autres types de composantes, telles que les différentes couches SVC ou les composantes YUV, il est procédé de façon connue en soi au codage/décodage de la composante CI₂₁, puis au codage de la composante CI₁₁ en référence à la composante CI₂₁, et ainsi de suite jusqu'au codage/décodage de la composante CI_{2W}, puis au codage de la composante CI_{1W} en référence à la composante CI_{2W}.

Au cours d'une étape C1 représentée à la **figure 2A****,** il est procédé, de façon connue en soi, à un codage par partitionnement de la composante d'image CI₂₁.

Au cours d'une sous-étape C11 représentée à la **figure 2A****,** la composante d'image CI₂₁ est partitionnée en une pluralité de blocs CTBr₁, CTBr₂, ..., CTBrᵢ,..., CTBr_{L} de taille 64x64 pixels (1≤i≤L). Un tel partitionnement est effectué par un module logiciel de partitionnement MPCI représenté à la **figure 3****.**

Il convient de noter qu'au sens de l'invention, le terme « bloc » signifie unité de codage (de l'anglais « coding unit »). Cette dernière terminologie est notamment utilisée dans la norme HEVC, par exemple dans le document « B. Bross, W.-J. Han, J.-R. Ohm, G. J. Sullivan, and T. Wiegand, "High efficiency video coding (HEVC) text specification draft 6," document JCTVC-H1003 of JCT-VC, San Jose CA, USA, February 2012».

En particulier, une telle unité de codage regroupe des ensembles de pixels de forme rectangulaire ou carrée, encore appelés blocs, macroblocs, ou bien des ensembles de pixels présentant d'autres formes géométriques.

Au cours d'une sous-étape C12 représentée à la **figure 2A****,** un bloc CTBrᵢ de la composante d'image CI₂₁ est sélectionné.

Au cours d'une sous-étape C13 représentée à la **figure 2A****,** le bloc CTBr_{¡} sélectionné est partitionné en une pluralité de blocs de codage Br₁, Br₂,..., Brⱼ,..., Br_{M} avec 1≤j≤M.

Le partitionnement précité est adapté pour être effectué une pluralité de fois jusqu'à l'obtention d'un niveau k (k≥0) déterminé de profondeur de partitionnement, pour lequel le partitionnement final obtenu pour le bloc CTBrᵢ sélectionné optimise par exemple un critère de performance de codage, en particulier le coût débit/distorsion.

Ledit partitionnement est mis en oeuvre par un module logiciel de partitionnement MP1 représenté sur la **figure 3****.**

Au cours d'une sous-étape C14 représentée à la **figure 2A****,** le niveau de profondeur de partitionnement du bloc CTBr_{¡} sélectionné est initialisé à la valeur k.

Les étapes C12 à C14 sont réitérées pour l'ensemble des blocs CTBr₁, CTBr₂, ..., CTBr_{L}.

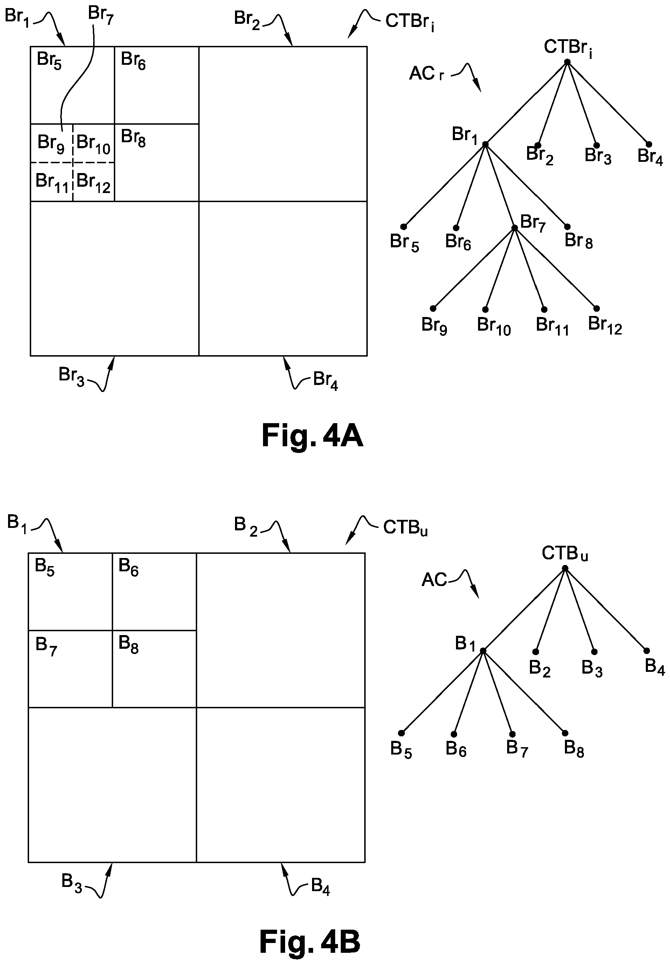

Un exemple de partitionnement du bloc CTBr_{¡} est représenté sur la **figure 4A****.**

Dans l'exemple représenté, le partitionnement effectué respecte une arborescence de type « quadtree », telle que décrite plus haut dans la description et dans laquelle le niveau de profondeur de partitionnement k est initialisé à 3.

D'autres types d'arborescence peuvent bien sûr être envisagés.

En référence à la **figure 4A****,** pour un bloc CTBr_{¡} donné, il est considéré que ce bloc constitue la racine d'un arbre de codage ACr dans lequel :
- un premier niveau de feuilles sous la racine correspond à un premier niveau de profondeur de partitionnement du bloc CTBrᵢ pour lequel le bloc CTBr_{¡} a été partitionné une première fois en une pluralité de blocs de codage, par exemple 4 blocs de codage Br₁, Br₂, Br₃, Br₄,
- un deuxième niveau de feuilles sous le premier niveau de feuilles correspond à un deuxième niveau de profondeur de partitionnement de bloc CTBrᵢ pour lequel le bloc CTBr_{¡} partitionné une première fois est partitionné une deuxième fois en une pluralité de blocs de codage, par exemple 4 blocs de codage Br₅, Br₆, Br₇, Br₈ issus du partitionnement du bloc Br₁,
- un troisième niveau de feuilles sous le deuxième niveau de feuilles correspond à un troisième niveau de profondeur de partitionnement de bloc CTBrᵢ pour lequel le bloc CTBrᵢ partitionné une deuxième fois est partitionné une troisième fois en une pluralité de blocs de codage, par exemple 4 blocs de codage Br₉, Br₁₀, Br₁₁, Br₁₂ issus du partitionnement du bloc Br₇.

Au cours d'une étape C2 représentée à la **figure 2A****,** il est procédé à la production de L séquences de bits Sr₁, Sr₂,..., Srᵢ,..., Sr_{L} qui sont représentatives respectivement des partitionnements effectués sur les blocs CTBr₁, CTBr₂, ..., CTBrᵢ,..., CTBr_{L}. Il est également procédé à la production d'une version décodée des blocs CTBr₁, CTBr₂, ..., CTBrᵢ,..., CTBr_{L}, qui sont notés CTBDr₁, CTBDr₂, ..., CTBDrᵢ,..., CTBDr_{L} sur les **figures 2** et **3****.** De tels blocs décodés sont destinés à être réutilisés par le codeur CO pour coder une composante d'image suivante, telle qu'en particulier la composante CI₁₁.

Une telle étape de production de séquences binaires est mise en oeuvre par un codeur entropique CE représenté à la **figure 3****.**

L'étape de décodage précitée est quant à elle mise en oeuvre par un module de décodage MD représenté également sur la **figure 3****.**

En référence à la **figure 2B****,** conformément à l'invention, en fonction du type des première et deuxième composantes d'image CI₁₁ et CI₂₁, deux alternatives C3a) et C3b) de codage par partitionnement sont envisagées.

Dans le cas par exemple où la composante d'image CI₂₁ qui vient d'être codée est une image de texture et que la composante d'image CI₁₁ à coder qui est associée à la composante d'image CI₂₁ est une image de profondeur, il est procédé à l'alternative de codage C3a) suivante.

Au cours d'une sous-étape C31a) représentée à la **figure 2B****,** la composante d'image CI₁₁ est partitionnée en une pluralité de blocs CTB₁, CTB₂, ..., CTBᵤ,..., CTB_{S} de taille 64x64 pixels (1≤u≤S). Une telle étape de partitionnement est mise en oeuvre par le module de partitionnement MPCI représenté sur la **figure 3****.**

Au cours d'une sous-étape C32a) représentée à la **figure 2B****,** un bloc CTBᵤ de la composante d'image CI₁₁ est sélectionné en tant que bloc courant à coder par rapport à au moins un bloc de référence codé, puis décodé choisi parmi les blocs CTBr₁, CTBr₂, ..., CTBrᵢ,..., CTBr_{L} de la composante d'image CI₂₁ codée puis décodée précédemment. On considère dans la suite de la description que le bloc de référence choisi est par exemple le bloc CTBrᵢ, le bloc courant CTBᵤ et le bloc de référence CTBr_{¡} ayant des positions identiques respectivement dans la première composante d'image CI₁₁ et dans la deuxième composante d'image CI₂₁.

Au cours d'une sous-étape C33a) représentée à la **figure 2B****,** le bloc CTBᵤ sélectionné est partitionné en une pluralité de blocs de codage B₁, B₂,..., B_{f},..., B_{G} avec 1≤f≤G.

Conformément à l'invention, Le partitionnement du bloc CTBᵤ est effectué une pluralité de fois jusqu'à l'obtention d'un niveau k' (k'≥0) qui dépend du niveau de profondeur de partitionnement k du bloc de référence CTBrᵢ.

Une telle relation de dépendance est exprimée par l'équation k'=a*k+b où a et b sont des entiers relatifs qui sont prédéterminés au codeur.

Une telle relation de dépendance permet ainsi au codage d'éviter de repartitionner le bloc CTBᵤ un trop grand nombre de fois, ce qui est coûteux en termes de complexité, tout en parvenant à l'obtention d'un partitionnement du bloc CTBᵤ qui reste conforme à un critère de performance de codage, tel que par exemple le coût débit/distorsion.

Ledit partitionnement est mis en oeuvre par ledit premier module logiciel de partitionnement MP1 représenté sur la **figure 3****.**

Les étapes C32a) à C33a) sont réitérées pour l'ensemble des blocs CTB₁, CTB₂,..., CTB_{S}.

Un exemple de partitionnement du bloc CTBᵤ est représenté sur la

### figure 4B.

Dans l'exemple représenté, le partitionnement du bloc courant CTBᵤ est effectué à un niveau de profondeur k'=2, inférieur au niveau de profondeur de partitionnement k du bloc de référence CTBrᵢ. A cet effet, dans la relation k'=a*k+b, a et b sont fixés préalablement au codeur de la façon suivante : a=1 et b= -1.

Il est bien entendu que selon le contexte de codage envisagé, tel que par exemple le contenu des composantes d'image CI₁₁ et CI₂₁, le niveau de profondeur de partitionnement k' peut être inférieur ou supérieur au niveau de profondeur de partitionnement k de plus d'un niveau de profondeur de partitionnement. La relation de dépendance k'=a*k+b est particulièrement avantageuse en ce sens puisqu'elle autorise une certaine souplesse d'adaptation du niveau de profondeur de partitionnement k' selon les situations rencontrées au codage.

En référence à la **figure 4B****,** pour un bloc CTBᵤ courant donné, il est considéré que ce bloc constitue la racine d'un arbre de codage AC dans lequel :
- un premier niveau de feuilles sous la racine correspond à un premier niveau de profondeur de partitionnement du bloc CTBᵤ pour lequel le bloc CTBᵤ a été partitionné une première fois en une pluralité de blocs de codage, par exemple 4 blocs de codage B₁, B₂, B₃, B₄,
- un deuxième niveau de feuilles sous le premier niveau de feuilles correspond à un deuxième niveau de profondeur de partitionnement de bloc CTBᵤ pour lequel le bloc CTBᵤ partitionné une première fois est partitionné une deuxième fois en une pluralité de blocs de codage, par exemple 4 blocs de codage B₅, B₆, B₇, B₈ issus du partitionnement du bloc B₁.

Dans l'exemple représenté, le bloc B₇ n'a donc pas été repartitionné en 4 blocs comme le bloc Br₇ du bloc de référence CTBrᵢ.

Au cours d'une étape C4a) représentée à la **figure 2B****,** il est procédé à la production de S séquences de bits S₁, S₂,..., Sᵤ,..., S_{S} qui sont représentatives respectivement des partitionnements effectués sur les blocs CTB₁, CTB₂, ..., CTBᵤ,..., CTB_{S}. Il est également procédé à la production d'une version décodée des blocs CTB₁, CTB₂, ..., CTBᵤ,..., CTB_{S}, qui sont notés CTBD₁, CTBD₂, ..., CTBDᵤ,..., CTBD_{S} sur la **figure 2B**. De tels blocs décodés sont destinés à être réutilisés par le codeur CO pour coder une composante d'image suivante.

Une telle étape de production de séquences binaires est mise en oeuvre par le codeur entropique CE représenté à la **figure 3****.**

L'étape de décodage précitée est quant à elle mise en oeuvre par le module de décodage MD représenté également sur la **figure 3****.**

On va maintenant décrire en référence à la **figure 2B****,** la deuxième alternative C3b) de codage par partitionnement qui est envisagée conformément à l'invention.

Une telle alternative est envisagée dans le cas par exemple où la composante d'image CI₂₁ qui vient d'être codée est une image de profondeur et que la composante d'image CI₁₁ à coder qui est associée à la composante d'image CI₂₁ est une image de texture.

Au cours d'une sous-étape C31b) représentée à la **figure 2B****,** la composante d'image CI₁₁ est partitionnée en une pluralité de blocs CTB'₁, CTB'₂, ..., CTB'ᵤ,..., CTB'_{S} de taille 64x64 pixels (1≤u≤S). Une telle étape de partitionnement est mise en oeuvre par le module de partitionnement MPCI représenté sur la **figure 3****.**

Au cours d'une sous-étape C32b) représentée à la **figure 2B****,** un bloc CTB'ᵤ de la composante d'image CI₁₁ est sélectionné en tant que bloc courant à coder par rapport à au moins un bloc de référence codé, puis décodé choisi parmi les blocs CTBr₁, CTBr₂, ..., CTBrᵢ,..., CTBr_{L} de la composante d'image CI₂₁ codée précédemment. On considère dans la suite de la description que le bloc de référence choisi est par exemple le bloc CTBrᵢ, le bloc courant CTB'ᵤ et le bloc de référence CTBr_{¡} ayant des positions identiques respectivement dans la première composante d'image CI₁₁ et dans la deuxième composante d'image CI₂₁.

Au cours d'une sous-étape C33b) représentée à la **figure 2B****,** il est procédé à l'initialisation du niveau de profondeur de partitionnement du bloc CTB'ᵤ, à partir du niveau de profondeur de partitionnement k'=a*k+b.

A cet effet, au cours d'une étape C34b) représentée à la **figure 2B****,** le bloc CTB'ᵤ est partitionné directement en une pluralité de blocs de codage B'₁, B'₂,..., B'_{g},..., B'_{H} avec 1≤g≤H, à partir du niveau de profondeur de partitionnement k' préalablement initialisé. Des étapes de partitionnement intermédiaires du bloc CTB'ᵤ sont ainsi évitées ce qui réduit notablement la complexité en calculs au codage.

A la suite de l'étape de partitionnement C34b) du bloc CTB'ᵤ, ce dernier peut être partitionné à nouveau une pluralité de fois jusqu'à l'obtention d'un niveau de profondeur de partitionnement prédéterminé au codeur.

Ledit partitionnement est mis en oeuvre par un second module logiciel de partitionnement MP2 représenté sur la **figure 3****.**

Les étapes C32b) à C34b) sont réitérées pour l'ensemble des blocs CTB'₁, CTB'₂,..., CTB'_{S}.

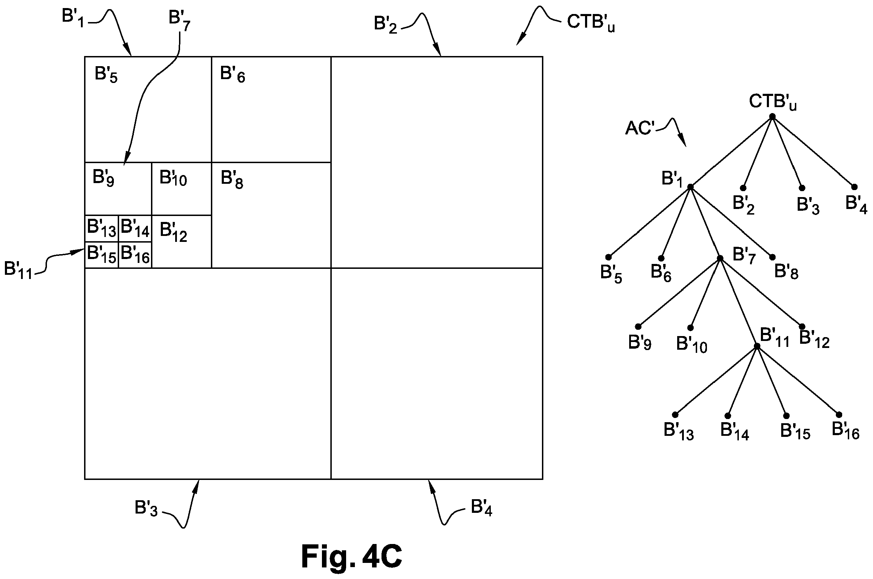

Un exemple de partitionnement du bloc CTB'ᵤ est représenté sur la **figure 4C****.**

Dans cet exemple, on considère que le bloc de référence CTBrᵢ utilisé pour coder le bloc courant CTB'ᵤ est celui qui a été partitionné comme représenté sur la **figure 4A****.**

Dans l'exemple représenté à la **figure 4C****,** le partitionnement du bloc courant CTB'ᵤ est effectué à partir d'un niveau de profondeur k'=4, supérieur au niveau de profondeur de partitionnement k du bloc de référence CTBrᵢ. A cet effet, dans la relation k'=a*k+b, a et b sont fixés préalablement au codeur de la façon suivante : a=1 et b= 1. Comme cela a été expliqué plus haut dans la description, d'autres choix de niveau de profondeur de partitionnement k' sont possibles selon le contexte vidéo. En particulier, le niveau de profondeur de partitionnement k' peut être inférieur ou supérieur au niveau de profondeur de partitionnement k de plus d'un niveau de profondeur de partitionnement.

En référence à la **figure 4C****,** pour un bloc CTB'ᵤ courant donné, il est considéré que ce bloc constitue la racine d'un arbre de codage AC' dans lequel :
- un premier niveau de feuilles sous la racine correspond à un premier niveau de profondeur de partitionnement du bloc CTB'ᵤ pour lequel le bloc CTB'ᵤ a été partitionné une première fois en une pluralité de blocs de codage, par exemple 4 blocs de codage B'₁, B'₂, B'₃, B'₄,
- un deuxième niveau de feuilles sous le premier niveau de feuilles correspond à un deuxième niveau de profondeur de partitionnement de bloc CTB'ᵤ pour lequel le bloc CTB'ᵤ partitionné une première fois est partitionné une deuxième fois en une pluralité de blocs de codage, par exemple 4 blocs de codage B'₅, B'₆, B'₇, B'₈ issus du partitionnement du bloc B'₁,
- un troisième niveau de feuilles sous le deuxième niveau de feuilles correspond à un troisième niveau de profondeur de partitionnement de bloc CTB'ᵤ pour lequel le bloc CTB'ᵤ partitionné une deuxième fois est partitionné une troisième fois en une pluralité de blocs de codage, par exemple 4 blocs de codage B'₉, B'₁₀, B'₁₁, B'₁₂ issus du partitionnement du bloc B'₇,
- un quatrième niveau de feuilles sous le troisième niveau de feuilles correspond à un quatrième niveau de profondeur de partitionnement de bloc CTB'ᵤ pour lequel le bloc CTB'ᵤ partitionné une troisième fois est partitionné une quatrième fois en une pluralité de blocs de codage, par exemple 4 blocs de codage B'₁₃, B'₁₄, B'₁₅, B'₁₆ issus du partitionnement du bloc B'₁₁.

Dans l'exemple représenté, le bloc B'₁₁ a donc été partitionné en 4 blocs contrairement au bloc Br₁₁ du bloc de référence CTBrᵢ.

Au cours d'une étape C4b) représentée à la **figure 2B****,** il est procédé à la production de S séquences de bits S'₁, S'₂,..., S'ᵤ,..., S's qui sont représentatives respectivement des partitionnements effectués sur les blocs CTB'₁, CTB'₂, ..., CTB'ᵤ,..., CTB'_{S}. Il est également procédé à la production d'une version décodée des blocs CTB'₁, CTB'₂, ..., CTB'ᵤ,..., CTB'_{S}, qui sont notés CTBD'₁, CTBD'₂, ..., CTBD'ᵤ,..., CTBD'_{S} sur la **figure 2B****.** De tels blocs décodés sont destinés à être réutilisés par le codeur CO pour coder une composante d'image suivante.

Une telle étape de production de séquence binaires est mise en oeuvre par le codeur entropique CE représenté à la **figure 3****.**

L'étape de décodage précitée est quant à elle mise en oeuvre par le module de décodage MD représenté également sur la **figure 3****.**

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de production d'une séquence binaire mettant en oeuvre un codage d'au moins un bloc courant (CTBᵤ ; CTB'ᵤ) d'une première composante d'image (CI₁₁) par rapport à un bloc de référence (CTBrᵢ) d'au moins une deuxième composante d'image (CI₂₁), lesdites première et deuxième composantes d'image étant représentatives d'une même scène, ledit bloc de référence ayant été au préalable soumis à un codage par partitionnement, puis à un décodage, ledit partitionnement du bloc de référence étant effectué une pluralité de fois jusqu'à l'obtention d'un niveau (k) (k≥0) déterminé de profondeur de partitionnement,
ledit procédé étant **caractérisé en ce qu'**il comprend les étapes consistant, en fonction du type des première et deuxième composantes d'image, à :
- soit partitionner (C33a)) le bloc courant une pluralité de fois jusqu'à l'obtention d'un niveau de profondeur de partitionnement (k') dépendant du niveau de partitionnement (k) du bloc de référence,
- soit partitionner (C34b)) le bloc courant à partir d'un niveau de profondeur de partitionnement ayant été préalablement initialisé (C33b)) par un niveau de profondeur de partitionnement (k ') qui dépend du niveau de profondeur de partitionnement (k) du bloc de référence,
ladite séquence binaire produite étant représentative du partitionnement obtenu.

2. Procédé de production de séquence binaire selon la revendication 1, dans lequel ladite étape de partitionnement du bloc courant, une pluralité de fois, est mise en oeuvre lorsque la première composante d'image est une image de profondeur et la deuxième composante d'image est une image de texture associée à ladite image de profondeur, le bloc courant et le bloc de référence ayant des positions identiques respectivement dans la première composante d'image et dans la deuxième composante d'image.

3. Procédé de production de séquence binaire selon la revendication 1, dans lequel ladite étape de partitionnement du bloc courant à partir d'un niveau de profondeur de partitionnement préalablement initialisé est mise en oeuvre lorsque la première composante d'image est une image de texture et la deuxième composante d'image est une image de profondeur associée à ladite image de texture, le bloc courant et le bloc de référence ayant des positions identiques respectivement dans la première composante d'image et dans la deuxième composante d'image.

4. Dispositif de production de séquence binaire d'au moins un bloc courant (CTBᵤ ; CTB'ᵤ) d'une première composante d'image (CI₁₁) par rapport à un bloc de référence (CTBrᵢ) d'au moins une deuxième composante d'image (CI₂₁), lesdites première et deuxième composantes d'image étant représentatives d'une même scène, ledit bloc de référence ayant été au préalable soumis à un codage par partitionnement, puis à un décodage, ledit partitionnement du bloc de référence étant effectué une pluralité de fois jusqu'à l'obtention d'un niveau (k) (k≥0) déterminé de profondeur de partitionnement,
ledit dispositif étant **caractérisé en ce qu'**il comprend :
- des premiers moyens (MP1) de partitionnement du bloc courant adaptés pour partitionner ce dernier une pluralité de fois jusqu'à l'obtention d'un niveau de profondeur de partitionnement (k') dépendant du niveau de partitionnement (k) du bloc de référence,
- des seconds moyens (MP2) de partitionnement du bloc courant adaptés pour partitionner ce dernier à partir d'un niveau de profondeur de partitionnement du bloc courant ayant été préalablement initialisé par un niveau de profondeur de partitionnement (k ') dépendant du niveau de profondeur de partitionnement (k) du bloc de référence,
lesdits premiers et seconds moyens de partitionnement étant activés sélectivement en fonction du type des première et deuxième composantes d'image,
ladite séquence binaire produite étant représentative du partitionnement obtenu.

5. Dispositif de production de séquence binaire selon la revendication 4, dans lequel lesdits premiers moyens de partitionnement sont activés lorsque la première composante d'image est une image de profondeur et la deuxième composante d'image est une image de texture associée à ladite image de profondeur, le bloc courant et le bloc de référence ayant des positions identiques respectivement dans la première composante d'image et dans la deuxième composante d'image.

6. Dispositif de production de séquence binaire selon la revendication 4, dans lequel lesdits seconds moyens de partitionnement sont activés lorsque la première composante d'image est une image de texture et la deuxième composante d'image est une image de profondeur associée à ladite image de texture, le bloc courant et le bloc de référence ayant des positions identiques respectivement dans la première composante d'image et dans la deuxième composante d'image.

7. Programme d'ordinateur comportant des instructions pour la mise en oeuvre du procédé de production de séquence binaire selon l'une quelconque des revendications 1 à 3, lorsque ce programme est exécuté par un processeur.

8. Support d'enregistrement lisible par un ordinateur sur lequel est enregistré un programme d'ordinateur comprenant des instructions pour l'exécution des étapes du procédé de production de séquence binaire selon l'une quelconque des revendications 1 à 3, lorsque ce programme est exécuté par un processeur.

## Patentansprüche

1. Verfahren zur Erzeugung einer Bitfolge unter Verwendung einer Codierung mindestens eines aktuellen Blocks (CTBᵤ; CTB'ᵤ) einer ersten Bildkomponente (CI₁₁) bezüglich eines Bezugsblocks (CTBrᵢ) mindestens einer zweiten Bildkomponente (CI₂₁), wobei die erste und die zweite Bildkomponente für eine gleiche Szene repräsentativ sind, wobei der Bezugsblock vorher einer Codierung durch Partitionierung, dann einer Decodierung unterzogen wurde, wobei die Partitionierung des Bezugsblocks mehrfach bis zum Erhalt einer bestimmten Ebene (k) (k≥0) der Partitionierungstiefe ausgeführt wird,
wobei das Verfahren **dadurch gekennzeichnet ist, dass** es die Schritte enthält, die abhängig von der Art der ersten und der zweiten Bildkomponente darin bestehen:
- entweder den aktuellen Block mehrfach bis zum Erhalt einer Partitionierungsebene (k') zu partitionieren (C33a)), die von der Partitionierungstiefenebene (k) des Bezugsblocks abhängt,
- oder den aktuellen Block ausgehend von einer Partitionierungstiefenebene zu partitionieren (C34b)), die vorher von einer Partitionierungstiefenebene (k') initialisiert wurde (C33b)), die von der Partitionierungstiefenebene (k) des Bezugsblocks abhängt,
wobei die erzeugte Bitfolge für die erhaltene Partitionierung repräsentativ ist.

2. Verfahren zur Erzeugung einer Bitfolge nach Anspruch 1, wobei der Schritt der mehrfachen Partitionierung des aktuellen Blocks durchgeführt wird, wenn die erste Bildkomponente ein Tiefenbild und die zweite Bildkomponente ein dem Tiefenbild zugeordnetes Texturbild ist, wobei der aktuelle Block und der Bezugsblock gleiche Positionen in der ersten Bildkomponente bzw. in der zweiten Bildkomponente haben.

3. Verfahren zur Erzeugung einer Bitfolge nach Anspruch 1, wobei der Schritt der Partitionierung des aktuellen Blocks ausgehend von einer vorher initialisierten Partitionierungstiefenebene durchgeführt wird, wenn die erste Bildkomponente ein Texturbild und die zweite Bildkomponente ein dem Texturbild zugeordnetes Tiefenbild ist, wobei der aktuelle Block und der Bezugsblock gleiche Positionen in der ersten Bildkomponente bzw. der zweiten Bildkomponente haben.

4. Vorrichtung zur Erzeugung einer Bitfolge mindestens eines aktuellen Blocks (CTBᵤ; CTB'ᵤ) einer ersten Bildkomponente (CI₁₁) bezüglich eines Bezugsblocks (CTBrᵢ) mindestens einer zweiten Bildkomponente (CI₂₁), wobei die erste und die zweite Bildkomponente für eine gleiche Szene repräsentativ sind, wobei der Bezugsblock vorher einer Codierung durch Partitionierung, dann einer Decodierung unterzogen wurde, wobei die Partitionierung des Bezugsblocks mehrfach bis zum Erhalt einer vorbestimmten Ebene (k) (k≥0) der Partitionierungstiefe ausgeführt wird,
wobei die Vorrichtung **dadurch gekennzeichnet ist, dass** sie enthält:
- erste Einrichtungen (MP1) zur Partitionierung des aktuellen Blocks, die geeignet sind, letzteren mehrfach bis zum Erhalt einer Partitionierungstiefenebene (k') zu partitionieren, die von der Partitionierungsebene (k) des Bezugsblocks abhängt,
- zweite Einrichtungen (MP2) zur Partitionierung des aktuellen Blocks, die geeignet sind, letzteren ausgehend von einer Partitionierungstiefenebene des aktuellen Blocks zu partitionieren, die vorher von einer Partitionierungstiefenebene (k') initialisiert wurde, die von der Partitionierungstiefenebene (k) des Bezugsblocks abhängt,
wobei die ersten und zweiten Partitionierungseinrichtungen selektiv abhängig von der Art der ersten und der zweiten Bildkomponente aktiviert werden,
wobei die erzeugte Bitfolge für die erhaltene Partitionierung repräsentativ ist.

5. Vorrichtung zur Erzeugung einer Bitfolge nach Anspruch 4, wobei die ersten Partitionierungseinrichtungen aktiviert werden, wenn die erste Bildkomponente ein Tiefenbild und die zweite Bildkomponente ein dem Tiefenbild zugeordnetes Texturbild ist, wobei der aktuelle Block und der Bezugsblock gleiche Positionen in der ersten Bildkomponente bzw. in der zweiten Bildkomponente haben.

6. Vorrichtung zur Erzeugung einer Bitfolge nach Anspruch 4, wobei die zweiten Partitionierungseinrichtungen aktiviert werden, wenn die erste Bildkomponente ein Texturbild und die zweite Bildkomponente ein dem Texturbild zugeordnetes Tiefenbild ist, wobei der aktuelle Block und der Bezugsblock gleiche Positionen in der ersten Bildkomponente bzw. der zweiten Bildkomponente haben.

7. Computerprogramm, das Anweisungen zur Durchführung des Verfahrens zur Erzeugung einer Bitfolge nach einem der Ansprüche 1 bis 3 aufweist, wenn dieses Programm von einem Prozessor ausgeführt wird.

8. Computerlesbarer Speicherträger, auf dem ein Computerprogramm gespeichert ist, das Anweisungen zur Ausführung der Schritte des Verfahrens zur Erzeugung einer Bitfolge nach einem der Ansprüche 1 bis 3 enthält, wenn dieses Programm von einem Prozessor ausgeführt wird.

## Claims

1. Method for producing a binary sequence implementing a coding of at least one current block (CTBᵤ; CTB'ᵤ) of a first image component (CI₁₁) with respect to a reference block (CTBrᵢ) of at least one second image component (CI₂₁), said first and second image components being representative of one and the same scene, said reference block having previously been subjected to coding by partitioning, and then to decoding, said partitioning of the reference block being performed a plurality of times until a determined level (k) (k≥0) of partitioning depth is obtained,
said method being **characterized in that** it comprises the steps consisting, as a function of the type of the first and second image components, in:
- either partitioning (C33a)) the current block a plurality of times until a level of partitioning depth (k') dependent on the level of partitioning (k) of the reference block is obtained,
- or partitioning (C34b)) the current block on the basis of a level of partitioning depth having been previously initialized (C33b)) by a level of partitioning depth (k') which depends on the level of partitioning depth (k) for the reference block,
said binary sequence produced being representative of the partitioning obtained.

2. Method for producing a binary sequence according to Claim 1, in which said step of partitioning the current block, a plurality of times, is implemented when the first image component is a depth image and the second image component is a texture image associated with said depth image, the current block and the reference block having identical positions in the first image component and in the second image component, respectively.

3. Method for producing a binary sequence according to Claim 1, in which said step of partitioning the current block on the basis of a previously initialized level of partitioning depth is implemented when the first image component is a texture image and the second image component is a depth image associated with said texture image, the current block and the reference block having identical positions in the first image component and in the second image component, respectively.

4. Device for producing a binary sequence of at least one current block (CTBᵤ; CTB'ᵤ) of a first image component (CI₁₁) with respect to a reference block (CTBrᵢ) of at least one second image component (CI₂₁), said first and second image components being representative of one and the same scene, said reference block having previously been subjected to coding by partitioning, and then to decoding, said partitioning of the reference block being performed a plurality of times until a determined level (k) (k≥0) of partitioning depth is obtained,
said device being **characterized in that** it comprises:
- first means (MP1) for partitioning the current block which are adapted for partitioning the latter a plurality of times until a level of partitioning depth (k') dependent on the level of partitioning (k) of the reference block is obtained,
- second means (MP2) for partitioning the current block which are adapted for partitioning the latter on the basis of a level of partitioning depth for the current block having been previously initialized by a level of partitioning depth (k') dependent on the level of partitioning depth (k) for the reference block,
said first and second partitioning means being activated selectively as a function of the type of the first and second image components,
said binary sequence produced being representative of the partitioning obtained.

5. Device for producing a binary sequence according to Claim 4, in which said first partitioning means are activated when the first image component is a depth image and the second image component is a texture image associated with said depth image, the current block and the reference block having identical positions in the first image component and in the second image component, respectively.

6. Device for producing a binary sequence according to Claim 4, in which said second partitioning means are activated when the first image component is a texture image and the second image component is a depth image associated with said texture image, the current block and the reference block having identical positions in the first image component and in the second image component, respectively.

7. Computer program comprising instructions for the implementation of the method for producing a binary sequence according to any one of Claims 1 to 3 when this program is executed by a processor.

8. Recording medium which can be read by a computer on which is recorded a computer program comprising instructions for the execution of the steps of the method for producing a binary sequence according to any one of Claims 1 to 3 when this program is executed by a processor.
